**Europäisches Patentamt**

**European Patent Office**

**Office européen des brevets**

(19)

(11) Veröffentlichungsnummer : **0 016 372**
**B1**

(12)

# EUROPÄISCHE PATENTSCHRIFT

(45) Veröffentlichungstag der Patentschrift :
11.08.82

(51) Int. Cl.³ : **C 01 B 21/096**

(21) Anmeldenummer : **80101100.8**

(22) Anmeldetag : **05.03.80**

(54) **Verfahren zur Herstellung von Ammoniumsulfamat.**

(30) Priorität : 08.03.79 DE 2909033

(43) Veröffentlichungstag der Anmeldung :
01.10.80 (Patentblatt 80/20)

(45) Bekanntmachung des Hinweises auf die Patenterteilung : 11.08.82 Patentblatt 82/32

(84) Benannte Vertragsstaaten :
**BE DE FR GB IT LU NL**

(56) Entgegenhaltungen :
DE A 2 710 399
DE B 1 442 976
DE B 1 915 723
US A 3 404 950
US A 3 484 193

(73) Patentinhaber : **HOECHST AKTIENGESELLSCHAFT**
**Postfach 80 03 20**
**D-6230 Frankfurt/Main 80 (DE)**

(72) Erfinder : **Gräser, Reinhold, Dr.**
**Loreleistrasse 81**
**D-6230 Frankfurt am Main 80 (DE)**

Imprimerie Jouve, 18, rue St-Denis, 75001 Paris, France

EP 0 016 372 B1

**0 016 372**

Verfahren zur Herstellung von Ammoniumsulfamat

Aus der DE-A 27 10 399 ist ein Verfahren zur Herstellung von Ammoniumsulfamat bekannt, bei dem Schwefeltrioxid und Ammoniak in ein Druckgefäß eingeleitet werden, das eine im wesentlichen aus Ammoniumsulfamat und Ammonium-imidodisulfonat bestehende Schmelze enthält. Bei diesem Verfahren hält man ein Molverhältnis $NH_3$ su $SO_3$ von 1,5 bis 1,99 zu 1 ein und entfernt die sich über der schmelzflüssigen Phase ansammelnden Gase nicht aus dem Druckgefäß.

Es wurde nun gefunden, daß bei Einsatz von technischem Ammoniak nach längeren Reaktionszeiten die Gasphase des Reaktors beträchtliche Anteile an Inertgas enthält. Technischer Ammoniak enthält nämlich prozeßbedingt neben Wasser auch Spuren von Inertgasen. Bei diesen Gasen handelt es sich im wesentlichen um $H_2$, $N_2$, $CH_4$, $CO_2$ und Argon. Die Menge der Inertgase ist von dem Syntheseeinsatzgas für die Herstellung des Ammoniaks und den Verfahrensbedingungen der Ammoniaksynthese selbst abhängig. In mehreren untersuchten Gasproben von technischem Ammoniak wurden z.B. 0,01 bis 0,1 Vol.-% Inertgase gefunden. Flüssiger Ammoniak enthält hingegen 0,1 bis 0,3 % Wasser. Bei der Verdampfung bleibt das Wasser entsprechend den Dampfdruckbedingungen im wesentlichen im Rückstand, während die gelösten Gase quantitativ in die Gasphase übergehen.

Wenn man für das Verfahren der DE-A 27 10 399 nicht reinen Ammoniak einsetzt, sondern technischen Ammoniak, so können sich die Inertgasanteile in dem Gasraum über der Schmelze anreichern und zu einer Erniedrigung des Ammoniak-Partialdruckes über der Schmelze führen, obwohl der von außen aufgepreßte Druck unverändert ist. Mit abnehmenden Ammoniak-Partialdruck nimmt der Anteil an Ammonium-imidodisulfonat in der Schmelze (bei gleicher Verweilzeit) zu, bis schließlich fast nur noch Ammonium-imidodisulfonat gebildet wird, das — wegen seines hohen Schmelzpunktes — aus der Schmelze ausfällt. Bei einem Gehalt der Schmelze von ca. 40 % Ammonium-imidodisulfonat oder mehr und einer Temperatur unter 150 °C ist damit ein Rühren der Schmelze nicht mehr möglich.

Es ist bekannt, daß sich aus Ammoniak und Schwefeltrioxid unter den Bedingungen des Verfahrens der DE-A 27 10 399 spurenweise elementarer Schwefel und Stickstoff bildet. Dieser Stickstoff kann ebenfalls zu einer Erniedrigung des Ammoniak-Partialdruckes über der Schmelze führen. Dies gilt insbesondere für Temperaturen über 300 °C. Da sich aber in der abgezogenen Ammoniumsulfamat-Schmelze geringe Anteile von Inertgas lösen, ist die Erniedrigung des Ammoniak-Partialdruckes bei Einsatz von reinem Ammoniak nicht gravierend.

Es bestand daher die Aufgabe die durch die allmähliche Ansammlung von Inertgasen im Druckgefäß verursachte verstärkte Bildung von Ammonium-imidodisulfonat zu unterdrücken.

Erfindungsgegenstand ist daher die weitere Ausbildung des Verfahrens zur Herstellung von Ammoniumsulfamat gemäß DE-A 27 10 399 durch Einleiten von Schwefeltrioxid und Ammoniak in ein Druckgefäß, das eine im wesentlichen aus Ammoniumsulfamat und Ammonium-imidodisulfonat bestehende Schmelze enthält, wobei man ein Molverhältnis $NH_3$ zu $SO_3$ von 1,5 bis 1,99 zu 1 einhält. Das erfindungsgemäße Verfahren ist dadurch gekennzeichnet, daß man das Druckgefäß nach 3-10 Stunden Reaktionszeit kurz entspannt und so die Hauptmenge der sich ansammelnden Inertgase ausschleust.

Dabei ist es möglich, wenn auch technisch aufwendig, den Ammoniak-Anteil der abgelassenen Gase zurückzugewinnen und wieder einzusetzen. Längere Zeiten ohne Unterbrechung sind möglich, wenn besonders wenig Verunreinigungen im eingesetzten Gas vorhanden sind oder bei der Durchführung der Reaktion entstehen. Während der Entspannung kann man das Einleiten von Ammoniak und Schwefeltrioxid unterbrechen ; man kann aber auch Ammoniak oder Ammoniak zusammen mit Schwefeltrioxid weiterhin einleiten. In diesem Fall sollen jedoch die Leitungen für Druckentlastung und Einleitung an verschiedenen Stellen des Druckreaktors liegen.

Bei der erfindungsgemäßen Ausgestaltung des Verfahrens der DE-A 27 10 399 ist es vorteilhaft, die Entspannung am obersten Punkt der Kalotte des Behälterdeckels des verwendeten Druckgefäßes vorzunehmen. Dabei wirkt der Gasraum über der Schmelze als Abschneider.

Das Einleiten der Reaktionspartner kann in der Weise erfolgen, daß man in eine gerührte Schmelze, bestehend aus den Reaktionsprodukten der Umsetzung von Schwefeltrioxid und Ammoniak flüssiges oder gasförmiges Schwefeltrioxid unter Rühren einleitet, während über der Schmelze ein konstanter Ammoniakdruck gehalten wird. Das Schwefeltrioxid reagiert mit dem in der Schmelze gelösten Ammoniak unter Bildung von Ammoniumsulfamat und Ammonium-imidodisulfonat, darüber hinaus mit der Schmelze selbst unter Bildung von Ammonium-hydrogen-imidodisulfonat, das anschließend in der Schmelze oder an der Grenzfläche zwischen Schmelze und Gas mit Ammoniak zu Ammoniumsulfamat und Ammonium-imidodisulfonat weiterreagiert. Darüberhinaus kann noch nicht umgesetztes Schwefeltrioxid an der Grenzfläche zwischen Gas und Schmelze oder im Gasraum selber mit Ammoniak reagieren. Durch Zugabe des für die Umsetzung mit dem Schwefeltrioxidbenötigten Ammoniaks in den Gasraum kann der Ammoniakdruck in der Gasphase über der Schmelze konstant gehalten und der Austrag von Reaktionsprodukten in flüssiger oder fester Form vermieden werden.

Bei Verwendung von flüssigem Ammoniak als Reaktionskomponente kann eine besonders wirksame Kühlung erreicht werden.

Der Ammoniak-Partialdruck im Gasraum des Druckgefäßes soll vorzugsweise mindestens 1 bar, insbesondere 5 bis 16 bar betragen. Bevorzugt sind Reaktionstemperaturen von 120 bis 350 °C.

2

# 0 016 372

## Vergleichsversuch

In einem Rührgefäß von 3 m³ Inhalt, das mit 1,5 m³ Ammoniumsulfamat-Schmelze gefüllt war (Gehalt an Ammoniumimidodisulfonat : 13,7 %) wurden pro Stunde 135 kg SO₃ und 55 kg gasförmiger technischer Ammoniak bei 215 °C eingepreßt. Der Druck betrug, 7,5 bar. Das Ammoniak wurde auf die gerührte Schmelze aufgedrückt und enthielt im Mittel 0,05 % Inertgase. Aus dem Reaktor wurden stündlich 195 kg eines schmelzflüssigen Produktes abgezogen und darin der Gehalt an Ammonium-imidodisulfonat in Abhängigkeit von der Laufzeit analysiert. Aus der folgenden Gegenüberstellung erkennt man die Zunahme des Anteils an Ammonium-imidodisulfonat.

| Laufzeit in h | Gehalt an $NH(SO_3NH_4)_2$ in Gew.-% |
|---|---|
| 0 | 13,7 |
| 8 | 14,2 |
| 20 | 15,8 |
| 32 | 17,4 |
| 44 | 19,5 |
| 56 | 21,1 |
| 59 | 22,2 |
| 63 | 38,0 |

Offensichtlich reagiert das Schwefeltrioxid nach längerer Laufzeit bevorzugt mit der Schmelze und die dabei entstehenden sauren Salze der Imidodisulfonsäure führen zu einer immer stärkeren Bildung von Ammonium-imidodisulfonat.

## Beispiel 1

Im Rührgefäß des Vergleichsversuchs wurden in 1,5 m³ einer Schmelze mit einem Gehalt von 18 % Ammonium-imidodisulfonat bei 205 °C 220 kg/h Schwefeltrioxid mit 90 kg/h Ammoniak (technisch) unter einem Druck von 7,5 bar umgesetzt. Alle 6 Stunden wurden während eines Zeitraums von 10 Minuten zusätzlich 13,3 kg Ammoniak in den Reaktor eingespeist. Durch diesen Zusatz wird das mittlere Molverhältnis NH₃/SO₃ von 1,92 auf 1,97 erhöht. Zur Aufrechterhaltung des Druckes wurde während dieser 10 Minuten gleichzeitig ein Ablaseventil teilweise geöffnet. Dieser Versuch wurde 5 Tage fortgesetzt. Danach lag der Gehalt der Schmelze konstant bei 18 % Ammonium-imidodisulfonat.

## Anspruch

Verfahren zur Herstellung von Ammoniumsulfamat durch Einleiten von Schwefeltrioxid und Ammoniak in ein Druckgefäß, das eine im wesentlichen aus Ammoniumsulfamat und Ammonium-imidodisulfonat bestehende Schmelze enthält, wobei man ein Molverhältnis von NH₃ zu SO₃ von 1,5 bis 1,99 zu 1 einhält, dadurch gekennzeichnet, daß man das Druckgefäß nach 3-10 Stunden Reaktionszeit kurz entspannt und so die Hauptmenge der sich ansammelnden Inertgase ausschleust.

## Claim

Process for the manufacture of ammonium sulfamate by introducing sulfur trioxide and ammonia into a pressure vessel containing a melt that substantially consists of ammonium sulfamate and ammonium imidodisulfonate, while maintaining a molar ratio between NH₃ and SO₃ from 1.5 : 1 to 1.99 : 1 which is characterized by releasing the pressure vessel shortly from pressure after reaction periods of from 3 to 10 hours and thus discharging the main quantity of the collecting inert gases.

## Revendication

Procédé de préparation du sulfamate d'ammonium par introduction d'anhydride sulfurique et d'ammoniac dans un autoclave contenant une masse fondue essentiellement constituée de sulfamate d'ammonium et d'imido-disulfonate d'ammonium, le rapport molaire de NH₃ à SO₃ étant maintenu entre 1,5 et 1,99, procédé caractérisé en ce qu'on détend pendant un court moment la pression dans l'autoclave après 3 à 10 heures de réaction, et on fait ainsi sortir la majeure partie du gaz inertes qui s'accumulent.

3